# EUROPÄISCHE PATENTANMELDUNG

(11) **EP 1 450 321 A1**
(43) Veröffentlichungstag der Anmeldung: **25.08.2004**
(21) Anmeldenummer: 03100433.6
(22) Anmeldetag: 21.02.2003
(51) Int. Cl.: G07F 19/00

(54) **Verfahren und System zur Aufdeckung von möglichen Betrügen in Zahlungstransaktionen**

(71) Anmelder: Swisscom Mobile AG, 3050 Bern (CH)
(72) Erfinder: Cantini, Renato, 1782, Belfaux (CH); Busch Lauper, Karin, 3014, Bern (CH)
(74) Vertreter: Saam, Christophe

(57) **Zusammenfassung**

Verfahren zur Aufdeckung von möglichen Betrügen in Zahlungstransaktionen zwischen einem Mobilteilnehmer (1) und einem Anbieter (2),
wobei Zahlungstransaktionen über eine Zahlungsplattform (31) in der Infrastruktur (3) des Mobilfunknetzes durchgeführt werden,
wobei Zahlungstransaktionen über mindestens einen mit der benannten Zahlungsplattform verbundenen Zahlungsdienstanbieter (4) bezahlt werden,
wobei Parameter des Zahlungsdienstanbieters und Parameter des Mobilfunknetzbetreibers gleichzeitig verwendet werden, um mögliche Betrüge aufzudecken.

## Beschreibung

Die vorliegende Erfindung betrifft ein Zahlungsmodul, insbesondere eine elektronische Zahlungskarte, sowie ein Zahlungssystem und ein Zahlungsverfahren um Zahlungen mit dieser Karte auszuführen.

Gemäss dem bisherigen Stand der Technik werden Zahlungstransaktionen zwischen einem Kunden (Benutzer, zum Beispiel einem Mobilteilnehmer) und einem Anbieter (beispielsweise einem Händler) oft mit einer elektronischen Zahlungskarte ausgeführt. Debit- und Kreditkarten werden zum Beispiel an Kassen in Geschäften, bei Tankstellen usw. verwendet. Die Karte umfasst meistens Speichermittel (zum Beispiel einen Magnetstreifen und/oder einen Chip) in welchen unter anderem die Identifizierung des Kunden gespeichert ist. Um eine Transaktion zu tätigen (zum Beispiel um in einem Geschäft einen Artikel zu bezahlen) muss der Benutzer seine Karte beim Händler in einen geeigneten Kartenleser einschieben. Das Terminal liest dann die Identifizierung des Geldkontos (zum Beispiel die PAN, Primary Account Number) in der Karte, ermittelt und zeigt den zu bezahlenden Betrag an, prüft gegebenenfalls die Solvenz des Benutzers und fordert vom Benutzer, dass er die Transaktion mit einer Bestätigungstaste auf dem Händler-Terminal bestätigt. Wenn der Kunde solvent ist und seine Bestätigung eingegeben hat, werden die Geldkontoinhaber-Identifizierung, der zu bezahlende Betrag und evtl. auch eine Terminal-Identifizierung an einen durch ein Telekommunikationsnetz mit dem Terminal verbundenen Finanzserver übermittelt. Entsprechend wird das Konto des Benutzers bei diesem Zahlungsdienstanbieterserver sofort oder später belastet.

Anbieter verfügen immer öfter über "virtuelle Terminals" (zum Beispiel Software-Komponenten), die für Zahlungstransaktionen mit einer Geldkarte miteinander kooperieren. In der nachfolgenden Beschreibung wird deshalb von Anbieter-Zahlungsmodul gesprochen, wobei das Modul entweder ein physisches Terminal sein kann oder eine Software-Anwendung.

Man unterscheidet bei kartenbasierten Zahlungssystemen zwischen Wertkarten (oder elektronisches Geld), Kreditkarten und Debitkarten. Bei Wertkarten weist die Zahlungskarte meist einen Speicherbereich auf, in welchen (in der Regel zuvor) ein Geldbetrag geladen wurde (Prepaid). Der Geldbetrag kann aus Sicherheitsgründen oft auch in einem Fernserver gespeichert werden; in diesem Fall kann die Wertkarte nur eine Identifizierung des entsprechenden Kontos in diesem Server umfassen. Bei Kreditkarten ist die Karte an ein Konto des Benutzers bei einem Finanzinstitut gebunden, wobei dieses Konto erst nach der Transaktion belastet wird (pay later). Bei Debitkarten hingegen muss das gebundene Konto beim Finanzinstitut im voraus geladen werden und wird während oder unmittelbar nach der Transaktion belastet (pay now).

Nachteilig in diesen Verfahren ist die Notwendigkeit, die Karte des Benutzers in ein fremdes Gerät einschieben zu müssen. Die Benutzer haben normalerweise ihre Karte nicht zur Hand, sondern zum Beispiel im Portemonnaie; eine sehr schnelle Transaktion ist also nicht möglich.

Diese Karten enthalten eine Geldkontoinhaber-Identifizierung, die indes nur erlaubt, die Benutzer beim Zahlungsdienstanbieter identifizieren zu lassen. Eine Karte kann also normalerweise nur dann für eine finanzielle Transaktion benutzt werden, wenn der Benutzer und der Anbieter beim gleichen Zahlungsdienstanbieter affiliiert sind. Dagegen ist der Gebrauch der Karte nicht für andere Arten von Transaktionen (zum Beispiel für nicht-finanzielle Transaktionen) vorgesehen. Für den Benutzer ist es also unumgänglich, stets eine grosse Anzahl von Karten für jegliche Arten von finanziellen oder nicht-finanziellen Transaktionen zu besitzen, zum Beispiel mehrere Wert-, Debit- oder Kreditkarten, die von verschiedenen Finanzinstituten oder Ladenketten verwaltet werden, oder Abonnementskarten oder Zugangskarten für geschützte Zonen. Diese Karten sind meistens durch verschiedene Pin-Codes geschützt, die sich der Benutzer mühsam einprägen muss. Ausserdem müssen sowohl Benutzer als auch Händler verschiedene Konten verwalten, das heisst für jedes Konto die allgemeinen Geschäftsbedingungen studieren, Prepaid und Wertkonten im voraus nachladen, Kontoauszüge prüfen, usw.

Um diese Probleme zu vermeiden, wurde unter anderem in der Patentanmeldung W098/37524 vorgeschlagen, die SIM-Karte (Subscriber Identity Module) zur Identifizierung des Benutzers in einem Mobilfunksystem als elektronische Zahlungskarte zu verwenden. Zur Übertragung der Transaktionsdaten wird eine kontaktlose Verbindung (zum Beispiel eine infrarote Verbindung) zwischen dem Benutzermobilgerät und dem Anbieterterminal aufgebaut. Dadurch erübrigt sich für den Benutzer die Notwendigkeit, eine elektronische Karte aus dem Portemonnaie zu ziehen und in ein fremdes Gerät einzuschieben.

Es sind beim bisherigen Stand der Technik auch Zahlungsverfahren bekannt, bei welchen Transaktionsdaten zwischen dem Benutzermobilgerät und einem Händlerterminal nicht direkt, sondern über eine Zahlungsplattform im Mobilfunknetz übertragen werden. Dabei werden Belege oder eine Referenz zur Transaktion, oft über SMS (Short-Message Service) oder USSD (Unstructured Supplementary Service Data) übertragen. Diese Lösungen haben den Vorteil, dass keine umständliche und sicherheitskritische direkte Verbindung zwischen Mobilgerät und Terminal aufgebaut werden muss. Ausserdem erlauben Sie auch Transaktionen zwischen Benutzer und Anbieter, die sich nicht in unmittelbarer Nähe voneinander befinden.

Es sind beim bisherigen Stand der Technik auch Zahlungsverfahren bekannt, bei welchen eine einzige Zahlungskarte mit mehreren Geldkonten verbunden ist. Dadurch erübrigt sich für den Benutzer die Notwendigkeit, mehrere Zahlungskarten bei sich zu haben.

Wird eine solche an mehrere Konten gebundene Karte mit einem (oft ebenfalls an mehrere Konten gebundenen) Terminal verwendet, muss der Benutzer bestimmen, welches Geldkonto für die Transaktion verwendet werden muss. Ist beispielsweise eine Karte an ein Prepaid-Wertkonto und an mehrere Kredit- und/oder Debit-Kartenkonten gebunden, kann der Benutzer meist in einem Menu im Händlerterminal entscheiden, welches Geldkonto belastet werden soll. Dabei kann er verschiedene Parameter berücksichtigen, beispielsweise die Bonität jedes Kontos, die Transaktionskosten, die Sicherheit, den Komfort usw.

Anbieter haben bei solchen Verfahren kaum eine Möglichkeit, die Auswahl des Benutzers zwischen den verfügbaren Geldkonten zu beeinflussen.

Für die Akzeptanz eines neuen Zahlungsdienstes durch die Benutzer und Anbieter und damit der Dienst wirtschaftlich betrieben werden kann, müssen strenge Sicherheitskriterien getroffen werden. Insbesondere müssen Betrüge oder wahrscheinliche Betrugsversuche zuverlässig und frühzeitig ermittelt werden. Werden mögliche Betrugsversuche vor der Zahlungstransaktion aufgedeckt, kann die Transaktion noch rechtzeitig als unzulässig erklärt und gesperrt werden. Werden Betrüge erst nach der Transaktion entdeckt, kann zumindest die betroffene Benutzerkarte beziehungsweise der Anbieter für weitere Transaktionen gesperrt werden; andere rechtliche und polizeiliche Massnahmen können auch getroffen werden. Es muss aber darauf geachtet werden, dass Betrugsdetektionssysteme nicht zu streng reagieren und dass gültige Transaktionen oder Karten nicht gesperrt werden.

Um mögliche Betrüge automatisch aufzudecken, folgen Zahlungsdienstanbieter einer Vielzahl von Parametern, mit welchen betrugstypische Verhaltensmuster aufgedeckt werden sollen. Unerwartete Änderungen des Zahlungsverhaltens, zum Beispiel wenn sich die Zahlungsbeträge und/oder die Häufigkeit der Zahlungstransaktionen plötzlich erhöhen, können zum Beispiel zusammen mit anderen Parametern als Indiz für einen möglichen Betrug (zum Beispiel eine gestohlene oder missgebrauchte Karte) gewertet werden. Ausgefeilte Algorithmen und Data-Mining Werkzeuge werden oft verwendet, um betrugstypisches Benutzer- oder Anbieter-Verhalten zu aufzudecken.

Eine Aufgabe der vorliegenden Erfindung ist es, ein Verfahren und ein System vorzuschlagen, welche erlauben, Betrüge und Betrugsversuche zuverlässiger aufzudecken.

Eine andere Aufgabe ist es, ein Verfahren und ein System vorzuschlagen, die zusätzliche Dienste und nützliche Funktionen erlauben.

Gemäss der vorliegenden Erfindung werden diese Ziele insbesondere durch die Elemente des kennzeichnenden Teils der unabhängigen Ansprüche erreicht. Weitere vorteilhafte Ausführungsformen gehen ausserdem aus den abhängigen Ansprüchen und der Beschreibung hervor.

Insbesondere werden diese Ziele durch ein Verfahren zur Aufdeckung von möglichen Betrügen in Zahlungstransaktionen zwischen zwei Partnern, zum Beispiel zwischen einem Mobilteilnehmer und einem Anbieter erreicht, in welchem:
wobei Zahlungstransaktiondaten und/oder Zahlungsautorisierungdaten über mindestens ein Mobilfunknetz übertragen werden,
wobei die benannte Zahlungstransaktionen über mindestens einen Zahlungsdienstanbieter (4) bezahlt werden
und wobei Parameter des Zahlungsdienstanbieters und Parameter des Mobilfunknetzbetreibers kombiniert werden, um mögliche Betrüge aufzudecken.

Die Zahlungsplattform befindet sich vorzugsweise in der Infrastruktur des Mobilfunknetzes oder kann auf netzwerkinterne Parameter des Mobilfunknetzes zugreifen. Diese Parameter umfassen beispielsweise den innerhalb des Mobilfunknetzes ermittelten Standort des Mobilteilnehmers, die innerhalb des Mobilfunknetzes ermittelte Zeit, die Trajektorie des Mobilfunknetzes, die verwendete SIM-Karte, das verwendete Mobilgerät, usw. Erfindungsgemäss werden diese Parameter des Mobilfunknetzbetreibers gleichzeitig mit Parametern des Zahlungsdienstanbieters verwendet, um mögliche Betrüge aufzudecken. Die Parameter des Zahlungsdienstanbieters umfassen unter anderem den verwendeten Zahlungsdienst, das verwendete Geldkonto, den Saldo auf dem verwendeten Geldkonto, den Zahlungsbetrag, usw. Dies hat den Vorteil, dass Betrüge durch die Verwendung von zusätzlichen Parametern und von neuen Parameterkombinationen schneller und zuverlässiger aufgedeckt werden, und dass neue Algorithmen angewendet werden können, mit welchen andere verdächtige Benutzer- und/oder Anbieter-Verhalten aufgedeckt werden können.

In einer bevorzugten Variante werden mindestens gewisse Geldkonten von der Plattform in der Infrastruktur des Mobilfunknetzes betrieben. Transaktionsdaten für Transaktionen mit mehreren Geldkonten, die eventuell von mehreren Zahlungsdienstanbietern und/oder mehreren Finanzinstituten angeboten werden,, werden somit durch eine gemeinsame Plattform übertragen und in dieser Zahlungsplattform bewertet. Dies hat den Vorteil, dass ein allfälliger Betrug mit grösserer Sicherheit aufgedeckt werden kann, da das Verhalten der Benutzer mit mehreren unabhängigen Geldkonten überwacht werden kann, und da dieses Verhalten mit Parametern, die nur in der Infrastruktur des Mobilfunknetzes vorhanden sind, korreliert werden kann. Diese Plattform hat ausserdem den Vorteil, dass konsolidierte Rechnungen und Kontoauszüge, welche Transaktionsdaten mit mehreren Geldkonten umfassen, für den Benutzer und/oder zu statistischen Zwecken verwendet werden können.

In einer bevorzugten Variante können Geldbeträge zwischen verschiedenen Geldkonten eines Benutzers, oder sogar zwischen verschiedenen Benutzern, vorzugsweise über die gemeinsame Plattform übertragen werden. Insbesondere wenn ein Anbieter gleichzeitig ein Mobilteilnehmer ist, können somit Peer-to-Peer Geldtransaktionen über die vom Netzwerkbetreiber betriebene Zahlungsplattform durchgeführt werden. Dies erlaubt zum Beispiel, ein Prepaid-Konto bei Überschreitung der Ausgabenlimite, auf Anforderung oder sogar automatisch (wenn vordefinierte Kriterien erfüllt sind) aus einem anderen Geldkonto vom selben oder von einem anderen Benutzer nachzuladen. Dies erlaubt auch, Geldbeträge von Personen zu Personen zu übertragen. Es können somit auch Debit- oder Kreditgrenzen für geschlossene Gruppen von Benutzern definiert werden.

Es können auch proaktive Nachladungsmittel vorgesehen werden, mit welchen Wert- und Debitkonten automatisch nachgeladen werden, wenn gewisse Kriterien erfüllt sind, beispielsweise wenn der Saldo auf einem Konto eine untere Schwelle erreicht.

Die verschiedenen Geldkonten eines Benutzers können von verschiedenen Zahlungsdienstanbietern geführt werden. Jeder Zahlungsdienstanbieter kann seine eigenen Geschäftsbedingungen für die Verwendung seines Dienstes festlegen. Das erfindungsgemässe System und Verfahren weist vorzugsweise Mittel zur Übertragung der Geschäftsbedingungen an den Benutzer auf, womit sichergestellt wird, dass diese Geschäftsbedingungen vom Benutzer gelesen wurden, sowie Mittel zur Sendung einer Bestätigung, dass diese Geschäftsbedingungen akzeptiert wurden.

Die Verfügbarkeit beziehungsweise die Sperrung eines bestimmten Geldkontos, das an eine Identifizierungskarte gebunden ist, kann abhängig von internen Parametern des Mobilfunknetzes veranlasst werden. Es ist zum Beispiel im Rahmen der Erfindung möglich, ein bestimmtes Geldkonto zu sperren, wenn sich der Benutzer ausserhalb eines vordefinierten geographischen Gebiets befindet und/oder während vordefinierten Zeitperioden.

Die vorliegende Erfindung wird mit Hilfe der als Beispiel gegebenen Beschreibung besser verständlich und durch die beiliegenden Figuren veranschaulicht:
Die Figur 1 zeigt ein Blockschema, das den Informationsfluss in einer bevorzugten Ausführungsform des Systems der Erfindung zeigt.
Die Figur 2 zeigt ein Blockschema, das mögliche Datenkanäle zwischen den verschiedenen Akteuren des Systems als Beispiel veranschaulicht.

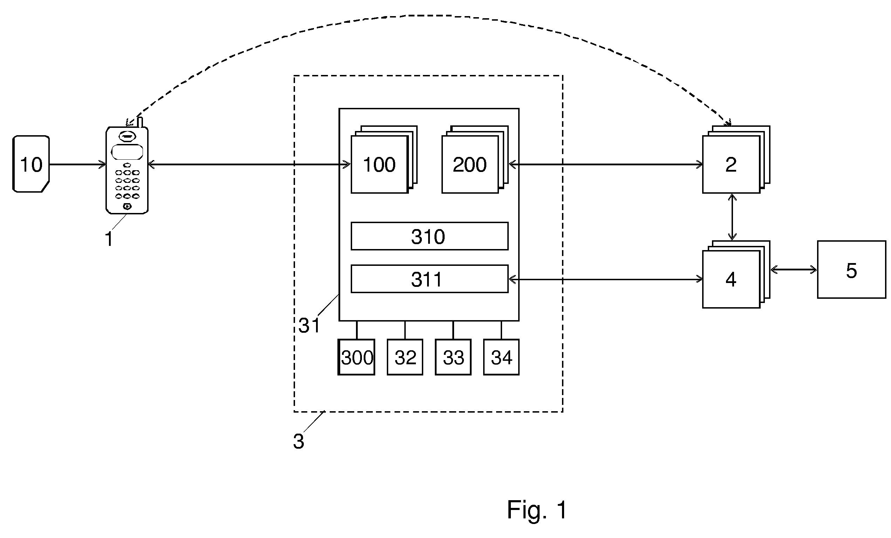

Figur 1 zeigt ein Blockschema mit den Hauptakteuren oder Komponenten des Systems. Im dargestellten Beispiel umfasst das System eine Vielzahl von Benutzern (Mobilteilnehmern), die je über ein Mobilgerät 1 verfügen. Mit "Mobilgerät" werden in diesem Kontext sowohl tragbare Geräte gemeint als auch Geräte, die an einem Fixnetz angeschlossen sind, die aber durch ein Identifizierungsmodul statt durch den Anschlusspunkt an das Netzwerk identifiziert werden.

In der Folge der Beschreibung und in den Ansprüchen wird mit dem Bezugszeichen 1 entweder der Benutzer (Kontoinhaber) oder das Mobilgerät 1 gekennzeichnet, ausser wenn ausdrücklich ein Unterschied gemacht wird. Die Mobilgeräte umfassen ein Identifizierungsmodul 10 zur Identifizierung des Benutzers in einem Mobilfunknetz. Das Identifizierungsmodul 10 ist vorzugsweise persönlich, tragbar, und kann vom Mobilgerät getrennt werden; es ist vorzugsweise eine Chipkarte. Das Mobilgerät 1 kann beispielsweise ein digitales zellulares Mobiltelefon sein (zum Beispiel ein GSM, HSCSD, GPRS, EDGE, CDMA) oder ein UMTS-Mobiltelefon, oder ein Rechner (zum Beispiel ein PDA) oder ein Laptop mit einer kontaktlosen Schnittstelle (zum Beispiel mit einer GSM, HSCSD, GPRS, EDGE, CDMA, UMTS oder WLAN-Erweiterungskarte). Als Variante könnte das Mobilgerät 1 auch ein ad-hoc Gerät sein, das Verbindungen in ein ad-hoc Netzwerk aufbauen kann. Das Identifizierungsmodul 10 ist beispielsweise eine SIM-Karte.

Das Benutzer-Mobilgerät 1 kann an die Infrastruktur 3 eines Mobilnetzwerks angeschlossen werden, um Sprach- und Datenverbindungen mit anderen Geräten aufzubauen. Mit Infrastruktur ist in dieser Beschreibung und in den Ansprüchen jener Teil eines Netzwerkes gemeint, welcher vom Betreiber des Netzwerkes verwaltet und gesteuert wird, einschliesslich die Basis-Stationen, Switches, Heimdateiregister, Verrechnungszentren, Server für zusätzliche Dienste usw. Die Infrastruktur 3 des erfindungsgemässen Systems umfasst eine Zahlungsplattform 31, die später näher beschrieben wird, zusätzliche Module 300, 32, 33, 34 sowie konventionelle Komponenten, die hier nicht beschrieben werden.

Ebenfalls an diese Infrastruktur angeschlossen sind eine Vielzahl von Anbietern 2, die den Benutzern 1 gegen Bezahlung Produkte, Informationen oder Dienstleistungen anbieten. Wie später erläutert, können Benutzer 1 manchmal auch Anbieter sein, während Anbieter 2 auch Produkte oder Dienstleistungen von anderen Anbietern oder Benutzer bestellen und bezahlen können, so dass die formelle Trennung zwischen Benutzern und Anbietern eher theoretisch ist. Anbieter können beispielsweise Händler (einschliesslich Online-Händler, Händler im Detailverkauf, Ticketverkäufer, Telekom-Mehrwertdienstanbieter und/oder Zahlungsautomaten) sein.

Anbieter verfügen über Anbieterzahlungsmodule, zum Beispiel POS-Terminals (Point-of-Sale) oder Zahlungsapplikationen. In der Folge der Beschreibung und in den Ansprüchen wird mit dem Bezugszeichen 2 entweder der Anbieter oder sein Anbieterterminal gekennzeichnet, ausser wenn ausdrücklich ein Unterschied gemacht wird.

Benutzer 1 und Anbieter 2 verfügen je über ein oder mehrere Geldkonten bei einem oder mehreren Finanzinstituten 5 auf die über eine Vielzahl von Zahlungsdienstanbietern 4 zugegriffen werden kann. Zahlungsdienstanbieter sind beispielsweise Kreditkarten-Firmen, Debitkartenfirmen, Banken, Postämter und anderen Finanzinstitute, die Zahlungskarten herausgeben, einschliesslich der Mobilfunknetzbetreiber. Finanzinstitute sind zum Beispiel Banken, Post und andere Organisation, die Geldkonten von Dritten verwalten. Jeder Zahlungsdienstanbieter 4 bietet einen oder mehrere Zahlungsdienste an, welche von Benutzern und Anbietern affiliiert werden können. Jeder Benutzer und Anbieter verfügt bei den Finanzinstituten über ein Geldkonto für jeden affiliierten Zahlungsdienst. Bei einem Kredit- oder Debitkartendienst wird das Geldkonto typischerweise beim Finanzinstitut abgelegt; bei Wertkarten hingegen befindet sich der Geldbetrag in einem Geldkonto in einer Benutzerchipkarte.

Während einem Zahlungstransaktionsvorgang werden typischerweise am Anfang Zahlungstransaktionsdaten und/oder Zahlungsautorisierungsdaten zwischen einem Benutzer und einem Anbieter ausgetauscht. Nach einem gewissen Zeitpunkt (zum Beispiel nachdem eine Bestellung beim Anbieter bestätigt wurde) wird der Benutzer an den Zahlungsdienstanbieter geleitet. Zahlungstransaktionsdaten werden dann zwischen dem Benutzer und dem Anbieter übertragen. Dieses unter anderem in W002/05231 beschriebene Verfahren gewährleistet die Vertraulichkeit der Zahlungsdaten gegenüber den Anbietern und deren Anonymität gegenüber den Zahlungsdienstanbietern.

Als Sonderfall von Geldkonten, die an eine Karte 10 gebunden sind, sind Mobilfunknetz Prepaid- und Postpaid-Geldkonten zu erwähnen. Diese Geldkonten werden vor allem zur Bezahlung von Diensten des Mobilfunknetzbetreibers verwendet, unter anderem zur Bezahlung von Sprachund Datenverbindungen durch das Netz, zum Kauf von zusätzlichen Diensten, einschliesslich das Nachladen von Ringtönen, Bildern, usw.

Zahlungsdienstanbieter verwenden den Server 4, um Benutzer für eine Transaktion zu identifizieren beziehungsweise zu authentifizieren, und um Geldtransaktion zu gestatten oder zu sperren. Zahlungsdienstanbieter können ausserdem Schwarzlisten von schlechten Zahlern und unerwünschten Benutzern aufbauen. Clearing-Operationen, Sendung von Rechnungen und Kontoauszügen, Nachladen von Prepaid-Konten und ähnliche Operationen werden auch von individuellen Zahlungsdienstanbietern 4 (beispielsweise mittels angeschlossener Finanzrechner 5) durchgeführt.

Gemäss den bisherigen Zahlungsverfahren bekommt jeder Benutzer eine physische Karte, um seine Affiliation an einen Zahlungsdienst vor einer Geldtransaktion zu beweisen. Jedes Geldkonto wird dann an eine andere Karte gebunden. Will ein Benutzer für seine verschiedenen Zahlungszwecke mehrere Debit-, Kredit-, und/oder Wertkarten affiliieren, muss er mehrere Zahlungskarten mitführen und für jede Zahlungstransaktion die passende auswählen, was sich als unpraktisch und sicherheitsproblematisch erweist.

Erfindungsgemäss werden mehrere Geldkonten, die mehreren Zahlungsdiensten von mehreren Zahlungsdienstanbietern 4 entsprechen können, an ein gemeinsames Identifizierungsmodul 10 gebunden. In einer bevorzugten Variante dient die SIM-Karte 10, die zur Identifizierung des Benutzers 1 in einem Mobilfunknetz bestimmt ist, als multifunktionelle Zahlungskarte, die an mehrere Geldkonten gebunden ist. Die Affiliation an mehreren Zahlungsdienste wird somit mit dem Besitz einer einzigen Chipkarte bewiesen.

Umgekehrt kann auch ein einzelnes Geldkonto an mehrere Identifizierungsmodule gebunden sein. Dies erlaubt zum Beispiel, das in einer Familie oder einem Unternehmen jedes Mitglied über sein eigenes Identifizierungsmodul verfügt, um auf ein gemeinsames Geldkonto zuzugreifen.

Das Identifizierungsmodul 10 enthält einen Speicher von jenen Bereichen die vom Mobilfunkbetreiber den Zahlungsdienstanbietern zum Ablegen der benötigten Daten zur Verfügung gestellt werden. Jeder Zahlungsdienstanbieter verwendet somit einen vorbestimmten Speicherbereich der SIM-Karten der affiliierten Benutzer, in welchem er Daten (beispielsweise Kartennummer, Geldbeträge, Spendegrenze, Transaktions-Logfiles, temporäre oder permanente dienstabhängige Daten und Programmen, usw) ablegen kann. In einer anderen bevorzugten Variante der Erfindung werden diese Daten (oder ein Teil dieser Daten) in einer Zahlungsplattform 31 in der Infrastruktur des Mobilfunknetzes abgelegt. Die verschiedenen Geldkonten, an welche eine Identifizierungskarte 10 gebunden ist, werden somit in einem virtuellen Wallet 100 in der Plattform 3 zusammengeführt. Ein logischer Link zwischen einer physischen Karte 10 und dem entsprechenden Wallet 100 von Geldkonten affillierter Zahlungsdienste kann beispielsweise über die Kartennummer IMSI (International Mobile Subscriber Identity) die MSISDN (Mobile Subscriber ISDN Number) und/oder die ICCID (Integrated Circuit Chip Identification) erfolgen.

Auf ähnliche Weise können alle Dienste und Geldkonten eines Anbieters 2 in einem Wallet 200 in der Zahlungsplattform 3 zusammengeführt werden, wobei ein logischer Link zwischen einem Anbieter 2 und dem entsprechenden Wallet 200 über eine Anbieter-Identifizierung erfolgen kann.

Das erfindungsgemässe System umfasst ausserdem ein automatisches Geldkontenbestimmungsmodul, um das ideale Paar von Geldkonten, welches vom Mobilteilnehmer-Identifizierungsmodul und von dem Anbieter-Zahlungsterminal für eine Zahlungstransaktion verwendet wird, automatisch zu bestimmen. Ein proaktives Nachlademodul 311 wird zur Nachladung der verschiedenen Geldkonten (manuell oder automatisch initiiert von verschiedenen Parametern) verwendet.

Die Infrastruktur des Mobilfunknetzes 3 umfasst ausserdem vorzugsweise ein Standortbestimmungsmodul 300, um den Standort des Benutzers zu bestimmen. Dieser Standort kann die Zelle des Mobilfunknetzes sein, in welcher sich der Benutzer momentan befindet, oder vorzugsweise mit einer besseren Genauigkeit anhand von Triangulationsverfahren aus Signalen von mehreren Antennen und/oder mit Satelliten-Standortbestimmungsmitteln ermittelt werden. Der ermittelte Standort kann verwendet werden, um Geldkonten in bestimmten Bereichen zu sperren oder zuzulassen.

Ein Cryptoserver 32 ist in der Infrastruktur 3 vorhanden, um Meldungen mit den Benutzern 1, mit den Anbietern 2 und/oder mit den Zahlungsdienstanbietern 4 zu verschlüsseln beziehungsweise zu entschlüsseln. Der Cryptoserver 32 kann auch verwendet werden, um die Authentizität, die Integrität und den Ursprung der Meldung zu prüfen und gegebenenfalls zu bestätigen.

Mit 33 wird das weiter unten beschriebene erfindungsgemässe Betrugsdetektionsmodul veranschaulicht. Dieses Modul verwendet sowohl Parameter, die innerhalb des Mobilfunknetzes bekannt sind (zum Beispiel Benutzerstandort und Anbieterstandort) und transaktionsspezifische Parameter (zum Beispiel die Identität der Transaktionspartner oder den Transaktionsbetrag) um verdächtige Transaktionen oder Karten 10 aufzudecken. In einer nicht dargestellten Variante wird dieses Modul von den Zahlungsdienstanbietern (statt vom Mobilfunknetzbetreiber) betrieben.

Das Element 34 ist eine Datenbank, in welcher die Geschäftsbedingungen der verschiedenen Zahlungsdienstanbieter abgelegt sind. Mittel sind vorgesehen, um sicherzustellen, dass diese Bedingungen von den Benutzern akzeptiert sind, bevor ein Geldkonto freigeschaltet wird.

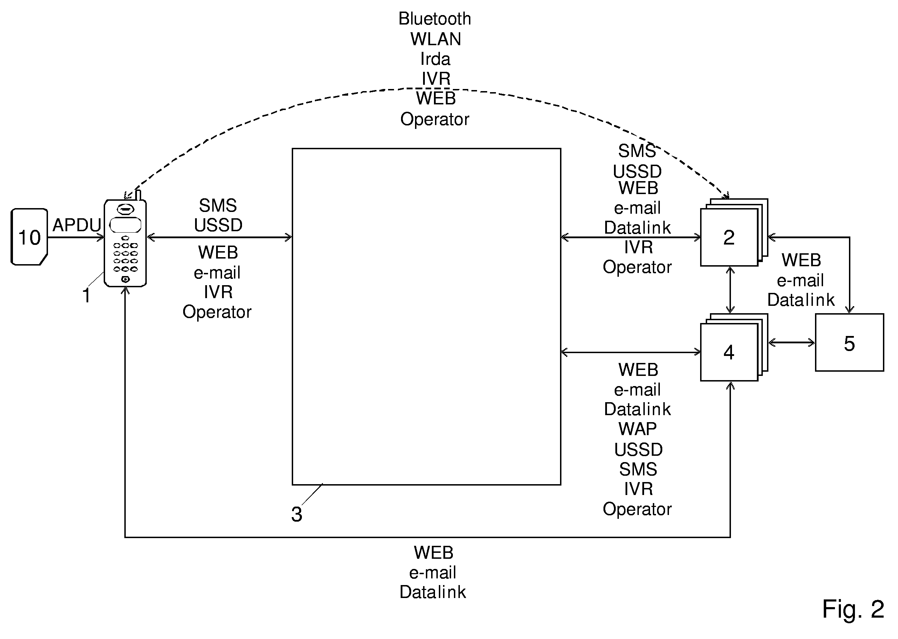

Die Figur 2 zeigt die möglichen Datenkanäle, die für eine Zahlungstransaktion zwischen den verschiedenen Aktoren des Systems verwendet werden können.

Das Identifizierungsmodul 10 wird typischerweise als ISO-Chipkarte im Mobilgerät 1 untergebracht und kommuniziert über APDU-Befehle mit diesem Mobilgerät. Das Mobilgerät ist beispielsweise ein GSM-Mobilgerät und kann somit über SMS (Short Message System) oder USSD (Unstructured Supplementary Service Data) oder über geroutete Datenpakete, Meldungen mit der Plattform 3 austauschen. Als Variante können Daten auch über Internet (zum Beispiel mit einem WEB oder WAP-Browser oder per E-Mail) zwischen dem Mobilgerät 1 und der Plattform 3 übertragen werden. In einer Variante verfügt die Plattform 3 über eine IVR-Schnittstelle (Interactive Voice Response) mit welcher über den Sprachkanal auch Sprachbefehle übertragen werden können. In einer anderen Variante können Daten auch über einen menschlichen Operator (zum Beispiel in einem Call Center) kommuniziert werden. In noch einer anderen Variante werden Daten über eine kontaktlose Schnittstelle, zum Beispiel eine WLAN oder Bluetooth-Schnittstelle, an die Plattform 3 gesendet.

Auf ähnliche Weise können Anbieter 2 ebenfalls über SMS, USSD, E-Mail, WEB, WAP, über einen IVR und/oder über einen menschlichen Operator, Daten mit der Zahlungsplattform 3 austauschen. Andere Datenverbindungen (zum Beispiel über geroutete Datenpakete oder über einen anderen Datenkanal) können im Rahmen der Erfindung auch vorgesehen werden.

Je nach Zahlungsablauf kann auch eine direkte Verbindung zwischen dem Benutzer 1 und dem Anbieter 2 aufgebaut werden, beispielsweise über Bluetooth, WLAN, WEB (zum Beispiel über eine Transaktionsreferenz), IVR, über einen menschlichen Operator oder über eine infrarote Schnittstelle, oder indem die SIM-Karte oder die gesamte Mobilstation galvanisch mit einem Terminal des Anbieters verbunden wird. Auf diese Weise können zumindest ein Teil der Zahlungsdaten schnell und kostenlos direkt übertragen werden.

Zahlungsdienstanbieter 4 brauchen keine Mobilität und werden somit vorzugsweise über einen festen Datenlink (zum Beispiel über WEB, E-Mail, geroutete Datenpakete, oder über einen anderen Datenlink) mit der Plattform 3, mit den Benutzern 1, (wenn nötig) mit den Anbietern 2 und gegebenenfalls mit den Finanzservern 5 verbunden. Die Verbindung zwischen der Zahlungsplattform 31 und den Zahlungsdienstanbietern 4 ist vorzugsweise gesichert (zum Beispiel über ein virtuelles privates Netzwerk). Zahlungsdaten zwischen der Zahlungsplattform 31 und den Zahlungsdienstanbietern können auch in Daten, die mehrere Zahlungstransaktionen betreffen, gesendet werden. Verbindungen mit den Benutzern 1 und mit den Anbietern 2 können auch über Fax oder Post vorgesehen werden.

Wie bereits erwähnt können sowohl Benutzer 1 als auch Anbieter 2 an mehrere Zahlungsdienste mehrerer Zahlungsdienstanbieter affiliiert werden. Dementsprechend können Identifizierungsmodule 10 und Terminals der Anbieter an mehrere Geldkonten 100 beziehungsweise 200 gebunden werden. Will ein Benutzer 1 eine Zahlungstransaktion mit einem Anbieter 2 ausführen, muss vorerst entschieden werden, mit welchem Zahlungsdienst die Transaktion durchgeführt wird. Beispielsweise muss entschieden werden, ob die Transaktion mit einem Kreditkarten- Debitkarten oder Wertkarten-Zahlungsdienst durchgeführt wird und mit welchem Anbieter dieses Typs von Diensten.

Diese Entscheidung wird vorzugsweise automatisch vom Bestimmungsmodul 310 getroffen. In der dargestellten bevorzugten Ausführungsform befindet sich dieses Modul in der Zahlungsplattform 31 und wird somit vom Betreiber des Mobilfunknetzes betrieben. Dies hat den Vorteil, dass dieser Betreiber gegenüber den verschiedenen Zahlungsdienstanbietern neutral sein kann und dass kein Anbieter bevorzugt wird. Ausserdem kann das Modul 310 Parameter verwenden, die innerhalb der Infrastruktur des Netzes bestimmt und bekannt sind.

Das Bestimmungsmodul besteht vorzugsweise aus einem Software und/oder Hardware-Modul, beispielsweise aus einer Software-Anwendung, die von einem Server in der Infrastruktur 3 des Mobilfunknetzes ausgeführt wird. Der Server kann über verschiedene Datenkanäle mit den Mobilgeräten 1, mit den Terminals der Anbieter 2 und mit den Zahlungsdienstanbietern 4 kommunizieren.

Die Entscheidung, ein bestimmtes Geldkonto für eine bestimmte Zahlungstransaktion zu verwenden, kann zum Beispiel von folgenden Parametern abhängig sein: Transaktionsbetrag, Bonuspunkte, vorbestimmte Mobilteilnehmerpräferenzen, Sicherheitsfaktoren, Anonymität, Standort des Benutzers, Identität des Mobilfunknetzes, in welchem der Mobilteilnehmer angemeldet ist, Wechselkurs mit den verschiedenen Geldkonten, Gebühren bei der Verwendung der verschiedenen Geldkonten, Zinsen, verfügbarer Saldo, periodische Kredit- oder Debitgrenzen, Zeit, Datum und/oder Wochentag, Logfile früherer Transaktionen, verwendetes Mobilgerät oder Mobilgerättyp, weisse beziehungsweise schwarze Liste von Anbietern und/oder Mobilteilnehmern, usw.

Andere Parameter und Prioritäten können von den Anbietern 2 und/oder von den Zahlungsdienstanbietern vorgesehen werden.

Aus Datenschutzgründen werden Zahlungstransaktionsdaten beziehungsweise Zahlungsautorisierungdaten vorzugsweise transparent durch das Mobilfunknetz übertragen; der Betreiber der Zahlungsplattform 3 hat in diesem Fall keine Möglichkeit, auf die Zahlungsdaten der unterschiedlichen Benutzer oder Anbieter zuzugreifen. In einer Variante werden mindestens gewisse Zahlungstransaktionsdaten oder Zahlungsautorisierungdaten, die für mindestens gewisse Zahlungsdienstanbieter bestimmt sind, vorzugsweise mit Zustimmung der Benutzer oder Anbieter der Zahlungsplattform zugänglich gemacht. Dies hat den Vorteil, dass die Zahlungsplattform mit den Zahlungsdaten verschiedener Benutzer, Anbieter und Zahlungsdienstanbieter zusätzliche Mehrwertdienste anbieten kann, einschliesslich:
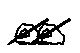 Sendung von konsolidierten Rechnungen an Benutzer und konsolidierten Gutschriften an Anbieter, in welchen Transaktionen, die über mehrere Zahlungsdienstanbieter durchgeführt wurden, zusammengefasst sind.
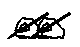 Bestimmung von konsolidierten Kredit- und/oder Debitgrenzen, um einen maximalen Ausgabebetrag pro Zeitspanne über mehrere Geldkonten festzulegen. Dies erlaubt eine höhere Sicherheit für den Benutzer, für die Anbieter und für die Zahlungsdienstanbieter, da die Gesamtausgaben mit allen Geldkonten eines Identifizierungsmoduls begrenzt sind.
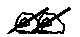 Detektion von Betrügen durch Überwachung des Verhaltens des Benutzers mit mehreren Geldkonten. Dieses Merkmal wird weiter unten ausführlicher beschrieben.
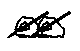 Geldtransaktionen zwischen mehreren Geldkonten, die an ein gemeinsames Identifizierungsmodul gebunden sind. Dies erlaubt zum Beispiel, ein Wert- oder Debitkonto aus einem anderen Geldkonto nachzuladen, zum Beispiel automatisch, wenn gewisse Kriterien erfüllt sind.
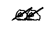 Ermittlung von Statistiken und Berichten über die Verwendung der verschiedenen Geldkonten. Dies erlaubt unter anderem Zahlungsdienstanbietern, Werbekampagnen und Angebote besser an die Bedürfnisse der Benutzer anzupassen.
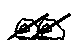 Gleichzeitige Sperrung beziehungsweise Entsperrung aller Geldkonten (die an ein gestohlenes oder verlorenes Identifizierungsmodul gebunden sind) durch den Betreiber oder durch den Benutzer.
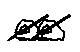 Bonuspunktesammlungsprogramme über mehrere Geldkonten mehrerer Zahlungsdienstanbieter.
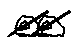 Direkte Transaktionen zwischen Geldkonten eines oder mehrerer Benutzer, ohne dass Transaktionsdaten an externe Zahlungsdienstanbieter gesendet werden. Dies erlaubt zum Beispiel, ein Prepaid-Konto eines Benutzers für die Verwendung des Mobilnetzwerkes mit einem anderen Geldkonto eines anderen Benutzers nachzuladen.
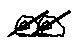 Verwendung von Benutzerparametern (Namen, Adresse, Solvenz, usw.), die für einen bestimmten Zahlungsdienst eingegeben wurden, für einen anderen, später affiliierten Zahlungsdienst eines anderen Zahlungsdienstanbieters.

In einer bevorzugten Variante werden Zahlungstransaktionsdaten beziehungsweise Zahlungsautorisierungsdaten anonymisiert, bevor sie der Zahlungsplattform zugänglich gemacht werden. Zu diesem Zweck wird die Benutzeridentifikation, die mit bestimmten Zahlungsdaten verknüpft ist, in einem Anonymizer durch einen für den Netzbetreiber ungenügend kennzeichnenden Alias ersetzt. Auf diese Weise können anonyme Zahlungsdaten in der Zahlungsplattform gesammelt, verwendet und statistisch bewertet werden, ohne Datenschutzgesetze zu verletzen.

Wir werden jetzt das erfindungsgemässe Verfahren zur Ermittlung von Transaktionsbetrügen und Transaktionsbetrugversuchen näher beschreiben. Erfindungsgemäss werden zur Detektion von Betrügen sowohl Parameter des Mobilfunknetzes 3 als auch Parameter des oder der Zahlungsdienstanbieter 4 verwendet. Im dargestellten Beispiel werden Betrüge von einem Betrugsdetektionsmodul 33 (zu Beispiel ein Server mit geeigneten Software-Anwendungen) in der Infrastruktur des Mobilfunknetzes 3 ermittelt. Dieser Modul 33 erhält Parameter des Mobilfunknetzes (das heisst Parameter, die innerhalb des Netzes ermittelt werden) direkt von der Zahlungsplattform 31 und/oder von anderen Hardware- und Software Komponenten der Netzwerkinfrastruktur. Parameter der Zahlungsdienstanbieter werden vorzugsweise über den entsprechenden Datenlink aus den Servern 4 der Zahlungsdienstanbieter herausgeholt. Alternativ können mindestens gewisse Zahlungsdienstanbieter-Parameter aus den durch die Zahlungsplattform 31 übertragenen Zahlungstransaktionsdaten oder Zahlungsautorisierungdaten ermittelt werden; in diesem Fall können aus Datenschutzgründen mindestens gewisse Transaktionsdaten anonymisiert sein.

Da die Zahlungsplattform 31 und der Betrugsdetektionsmodul 33 in dieser Variante zentralisiert sind, können Parameter von verschiedenen Zahlungsdienstanbietern 4 kombiniert werden, um dubiose Verhaltensweisen mit einer noch grösseren Zuverlässigkeit zu ermitteln. Beispielsweise können Zahlungstransaktionsdaten mit einem Kreditkartendienstanbieter und mit einem Debitkartendienstanbieter zusammen gewertet werden, um zu bestimmen, ob das Benutzerverhalten verdächtig ist. Wird ein Betrug oder Betrugsversuch mit einem Zahlungsdienstanbieter aufgedeckt, können alle Geldkonten, die an die betroffene Karte gebunden sind, gleichzeitig gesperrt werden.

Das Betrugsdetektionsmodul kombiniert möglichst viele Parameter und teilt jedem Parameter oder jeder Parameterkombinationeinen 'Score' zu, der bei deutlicheren Betrugshinweisen höher liegt als bei weniger eindeutigen. Manche Parameter oder Parameterkombinationen die auf Nichtbetrug hindeuten haben einen negativen Score. Am Ende addiert das Modul alle Scores und markiert die Transaktionsversuche (oder die Benutzer oder die Anbieter) als verdächtig, sofern die Summe über einer vordefinierten Schwelle liegt. Durch die grosse Zahl von verschiedenen Parametern und durch die neuen Kombinationen von Paramtetern des Netzwerks und der verschiedenen Zahlungsdienstanbieter erreicht das Betrugsdetektionsmodul eine sehr hohe Trefferquote.

Die Parameter, die zur Aufdeckung von Betrügen verwendet werden, können vor jeder Zahlungstransaktion gesammelt und verwertet werden. In diesem Fall kann das Betrugsdetektionsmodul 33 die Transaktion genehmigen oder im Gegenteil verbieten, oder sogar die Karte 10 des Benutzers 1 oder den Anbieter 2 sperren und auf ein schwarze Liste setzen. Die Empfehlung, eine Transaktion zu genehmigen oder zu sperren, kann an den betreffenden Zahlungsdienstanbieter gesendet werden.

Zusätzlich zur Verwertung der Betrugsdetektionsparameter, die vor jeder Zahlungstransaktion zusammengestellt werden, können Parameter für mehrere Transaktionen eines Mobilteilnehmers oder Anbieters statistisch bearbeitet werden, um verdächtige und/oder ungewöhnliche Zahlungsverhalten aufzudecken und gegebenenfalls die betroffenen Mobilteilnehmer 1 oder Anbieter 2 zu sperren, bevor sie neue Transaktionen durchführen. Zu diesem Zweck können beispielsweise auch Data-mining-Werkzeuge verwendet werden.

In einer nicht dargestellten Variante könnte sich das Betrugsdetektionsmodul auch ausserhalb der Infrastruktur des Mobilfunknetzes 3 befinden, zum Beispiel bei einem Zahlungsdienstanbieter4. In diesem Fall werden netzwerkspezifische Parameter an dieses externe Betrugsdetektionsmodul übertragen. Diese Variante hat jedoch den Nachteil, dass für jeden Zahlungsdienstanbieter ein Betrugsdetektionsmodul vorgesehen werden muss und dass Parameter verschiedener Zahlungsdienstanbieter kaum zusammen gewertet werden können.

In einer anderen nicht dargestellten Variante befinden sich einige Komponenten des Betrugsdetektionsmoduls innerhalb der Netzwerkinfrastruktur 3 und andere Komponenten ausserhalb dieser Infrastruktur, beispielsweise bei den Zahlungsdienstanbietern 4. Jede Komponente kann dann andere Parameter bewerten und einen Score zuteilen; Die in jeder Komponente ermittelten Scores werden kombiniert, um die Wahrscheinlichkeit eines Betruges zu ermitteln. Diese Variante hat den Vorteil, dass weder spezifische Mobilfunknetzparameter noch Zahlungsdienstanbieterparameter ausgetauscht werden müssen. Ein Zahlungsdienstanbieter muss beispielsweise nicht den Transaktionsbetrag an die Netzwerkinfrastruktur kommunizieren, sondern lediglich einen Score der angibt, ob er er dieser Betrag - oder andere Parameter oder Parameterkombinationen - als verdächtig betrachtet.

Die Parameter des Mobilfunknetzbetreibers, die innerhalb der Netzwerkinfrastruktur ermittelt werden und zur Ermittlung von möglichen Betrügen verwendet werden können, umfassen beispielsweise:
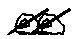 Den Standort des Benutzers, der vom Standortbestimmungsmodul 300 ermittelt werden kann.
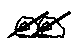 Die Identität des Mobilfunknetzes, in welchem der Mobilteilnehmer momentan angemeldet ist.
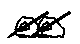 Den Standort des Anbieters.
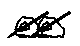 Die Trajektorie des Mobilteilnehmers vor oder während der Transaktion.
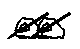 Die Trajektorie des Anbieters vor oder während der Transaktion.
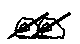 Die verwendete Kombination von Mobilgerät und Identifizierungsmodul. Eine Zahlungstransaktion mit einer SIM-Karte, die zum ersten Mal mit einem gewissen Mobilgerät verwendet ist, ist verdächtiger als eine Transaktion mit einem bekannten Paar.
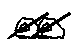 Übertragungskanal, der für die Zahlungstransaktion verwendet wird (zum Beispiel SMS, USSD, Bluetooth, usw.). Plötzliche Benutzerverhaltensänderungen sind verdächtig.
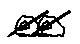 Mobilgerätbenutzungsprofil des Mobilteilnehmers.
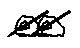 Mobilgerätbenutzungsprofil des Anbieters.
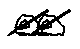 Manuelle statt automatische (beziehungsweise ungewöhnliche) Auswahl des verwendeten Zahlungsdienstes.
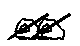 Nachladeverfahren für die Nachladung eines Prepaid-Kontos.
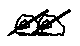 Zeit, Datum und Wochentag, die in der Infrastruktur des Mobilfunknetzes ermittelt werden.

Diese Parameter können auch kombiniert werden.

Die Parameter der Zahlungsdienstanbieter die von den Zahlungsdienstanbietern 4 ermittelt werden und zur Ermittlung von möglichen Betrügen verwendet werden können, umfassen beispielsweise:
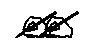 Den verwendeten Zahlungsdienst. Ein neuer Kunde ist zum Beispiel verdächtiger als ein alter Kunde.
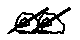 Das verwendete Geldkonto.
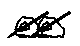 Den Saldo auf dem verwendeten Geldkonto.
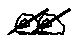 Das Zahlungsdienstbenutzungsprofil.
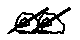 Den Zahlungsbetrag.
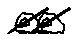 Die Zahlungstransaktionsfrequenz.
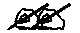 Den Anbieter.
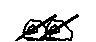 Mehrere Falschversuche bei der Authentifikation.
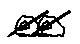 Zeit, Datum, und/oder Wochentag, die von den Zahlungsdienstanbietern ermittelt werden.
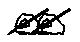 Logfile früherer Transaktionen.
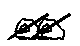 Profildaten des Mobilteilnehmers beim Zahlungsdienstanbieter.
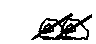 Schwarze Liste von Anbietern und/oder Mobilteilnehmern, die für Transaktion mit einem gewissen Geldkonto gesperrt sind.
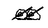 Weisse Liste von Anbietern und/oder Mobilteilnehmern, die für eine Transaktion mit einem gewissen Geldkonto zugelassen sind. Weisse Listen können von Drittparteien vorbereitet und beispielsweise über das Internet ferngeladen werden.
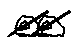 Graue Liste von verdächtigen Benutzern oder Anbietern, die noch nicht gesperrt sind, für die aber beispielsweise eine Kreditgrenze bald oder bereits überschritten ist.
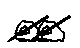 Schwarze Liste von Anbietern und/oder Mobilteilnehmern, die für eine Transaktion mit einem gewissen Geldkonto gesperrt sind. Schwarze Listen können von Drittparteien vorbereitet und beispielsweise über das Internet ferngeladen werden.
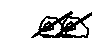 Anzahl von Transaktionen mit jedem Geldkonto während einer vorbestimmten Periode.
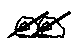 Profil des Benutzers, einschliesslich zum Beispiel sein Alter, sein Konto-Typ, andere soziologische Daten, usw.

Wie bereits erwähnt, können Parameter von mehreren Zahlungsdienstanbietern kombiniert werden, um andere verdächtige Verhalten aufzudecken. Mehrere hohe Ausgaben mit mehreren Zahlungsdiensten, an welche eine Karte gebunden ist, können zum Beispiel als verdächtig betrachtet werden.

Wir werden jetzt einige Beispiele von Benutzerverhalten beschreiben, die vom Betrugsdetektionsmodul als verdächtig betrachtet werden können, und die anhand von Kombinationen von Parametern des Netzwerkes und der Zahlungsdienstanbieter aufgedeckt werden können:
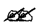 Unterschiedliche Standorte des Benutzers und des Anbieters für eine Transaktion, für welche eine Proximität erwartet wird (zum Beispiel, bei einer Zahlung an einer Geschäftskasse).
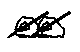 Unterschiedliche Trajektorie des Benutzers und des Anbieters für eine Transaktion in einem Vehikel (zum Beispiel, in einem Taxi, in öffentlichen Verkehrsmitteln, usw.)
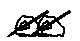 Ungewöhnlicher Standort des Benutzers und ungewöhnlicher Transaktionsbetrag.
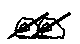 Ungewöhnlicher Übertragungskanal für die Transaktionsdaten und ungewöhnlicher Transaktionsbetrag (zum Beispiel wenn ein Benutzer, der seine Transaktionen stets über SMS durchführte, plötzlich einen grossen Betrag über USSD ausgibt).
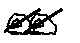 Ungewöhnliches besuchtes Mobilfunknetzwerk und ungewöhnlicher Transaktionsbetrag beziehungsweise ungewöhnlicher Übertragungskanal für die Transaktionsdaten.
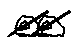 Ungewöhnliche Kombination der SIM-Karte mit dem Mobilgerät, zusammen mit einem ungewöhnlichen Transaktionsbetrag.
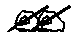 Ungewöhnliche Transaktion von Person zu Person an einem ungewöhnlichen Standort oder zu einer ungewöhnlichen Zeit.
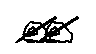 Nachladung eines Geldkontos mit einem ungewöhnlichen Nachladeverfahren oder mit einem ungewöhnlichen Betrag.
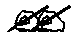 Mehrere Authentifikationsversuche beim Zahlungsdienstanbieter, kombiniert mit einem ungewöhnlichen Übertragungskanal beim Netzwerkbetreiber.
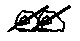 Usw. Alle möglichen Kombinationen der oben genannten Netzwerk-und Zahlungsdienstanbieter-Parameter können grundsätzlich verwendet werden.

Betrugsdetektionsmodul kann auch derart gestaltet sein, dass es externe Parameter, die von externen über Internet verbundenen Drittparteien zur Verfügung gestellt werden, berücksichtigt. Diese Parameter können beispielsweise Listen von schlechten Zahlern oder verdächtigen Anbietern, oder sicherheitskritische Vorgänge, umfassen.

Diese Parameter und Kombinationen von Parametern werden nur als Beispiel angegeben; der Fachmann wird verstehen, dass alle Netzwerkparameter oder Gruppen von Netzwerkparametern mit allen Zahlungsdienstanbieterparametern (oder Gruppen von Zahlungsdienstanbietern) kombiniert werden können, um verdächtige Verhalten zu ermitteln.

Das Betrugsdetektionsmodul ermittelt anhand der verschiedenen Parameter die Wahrscheinlichkeit eines Betruges oder Betrugsversuches. Ist diese Wahrscheinlichkeit höher als eine vorbestimmte Schwelle, sendet das Modul eine Meldung an die Zahlungsplattform 31, an den Zahlungsdienstanbieter 4, an den Anbieter 2 und/oder an den Benutzer 1, um die Transaktion zu sperren. Die Betrugswahrscheinlichkeiten in mehreren sukzessiven Transaktionen eines bestimmten Benutzers können auch summiert werden, um verdächtige Benutzer noch effizienter aufzudecken.

Das erfindungsgemässe Verfahren bzw. System kann unter anderem verwendet werden, um Geldtransaktionen von Benutzer zu Benutzer (P-to-P) durchzuführen.

## Patentansprüche

1. Verfahren zur Aufdeckung von möglichen Betrügen in Zahlungstransaktionen zwischen mindestens zwei Partnern (1, 2),
wobei Zahlungstransaktiondaten und/oder Zahlungsautorisierungdaten über mindestens ein Mobilfunknetz übertragen werden,
wobei die benannte Zahlungstransaktionen über mindestens einen Zahlungsdienstanbieter (4) durchgeführt werden
**dadurch gekennzeichnet, dass** Parameter des Zahlungsdienstanbieters und Parameter des Mobilfunknetzbetreibers kombiniert werden, um mögliche Betrüge aufzudecken.

2. Verfahren gemäss Anspruch 1, in welchem die benannte Zahlungstransaktion über eine Zahlungsplattform (31) erfolgt.

3. Verfahren gemäss Anspruch 2, in welchem die benannte Zahlungsplattform (31) sich in der Infrastruktur des benannten Mobilfunknetzes befindet.

4. Verfahren gemäss einem der Ansprüche 1 bis 3, in welchem der benannte Partner an mehrere Geldkonten (100) mehrerer Zahlungsdienstanbieter gebunden ist, und in welchem Parameter von mehreren Zahlungsdienstanbietern verwendet werden, um mögliche Betrüge aufzudecken.

5. Verfahren gemäss einem der Ansprüche 1 bis 4, in welchem alle Zahlungsdienste an welche ein Partner gebunden ist, gesperrt werden, sobald ein Betrug oder Betrugversuch des Partners entdeckt wird.

6. Verfahren gemäss Anspruch 2, in welchem beide Partner jeweils an mehrere Geldkonten (100) gebunden sind, und in welchem das Paar von Geldkonten, das für eine bestimmte Zahlungstransaktion verwendet wird, automatisch von der benannten Zahlungsplattform bestimmt wird.

7. Verfahren gemäss einem der Ansprüche 1 bis 6, in welchem Tests zur Detektion von möglichen Betrügen vor jeder Zahlungstransaktion durchgeführt werden.

8. Verfahren gemäss Anspruch 7, in welchem die benannten Tests mindestens teilweise in der Infrastruktur des benannten Mobilfunknetzes durchgeführt werden.

9. Verfahren gemäss einem der Ansprüche 7 oder 8, in welchem die benannten Tests Zahlungstransaktionsdaten verwenden.

10. Verfahren gemäss einem der Ansprüche 7 bis 9, in welchem die benannten Tests Profildaten eines benannten Partners beim Zahlungsdienstanbieter (4) umfassen.

11. Verfahren gemäss einem der Ansprüche 1 bis 10, in welchem die benannten Parameter des Mobilfunknetzbetreibers mindestens einen der folgenden Parameter umfassen:
Standort des ersten Partners,
Identität des Mobilfunknetzes,
Standort des zweiten Partners,
Trajektorie des ersten Partners,
Trajektorie des zweiten Partners,
Verwendete Kombination von Mobilgerät und Identifizierungsmodul,
Übertragungskanal, der für die Zahlungstransaktion verwendet wird,
Mobilgerätbenutzungsprofil des ersten Partners,
Mobilgerätbenutzungsprofil des zweiten Partners,
Manuelle und/oder ungewöhnliche Auswahl des verwendeten Zahlungsdienstes,
Zeit, und/oder
Datum, und/oder
Wochentag.

12. Verfahren gemäss einem der Ansprüche 1 bis 11, in welchem die benannten Parameter des Zahlungsdienstanbieters mindestens einen der folgenden Parameter umfassen:
verwendeter Zahlungsdienst,
verwendetes Geldkonto,
Saldo auf dem verwendeten Geldkonto,
Zahlungsdienstbenutzungsprofil,
Zahlungsbetrag,
Zahlungstransaktionsfrequenz,
Anbietender Partner,
Mehrere Falschversuche bei der Authentifikation,
Zeit, und/oder
Datum, und/oder
Wochentag, und/oder
Logfile früherer Transaktionen,
Schwarze Liste von Partnern, die für Transaktion mit einem gewissen Geldkonto gesperrt sind,
Weisse Liste von Partnern, die für eine Transaktion mit einem gewissen Geldkonto zugelassen sind.
Graue Liste von verdächtigen Partnern,
Anzahl von Transaktionen mit jedem Geldkonto während einer vorbestimmten Periode,
Profil des Partners.

13. Verfahren gemäss einem der Ansprüche 1 bis 12, in welchem die benannten Parameter das Verfahren das zur Nachladung von Geldkonten verwendet wird, umfassen.

14. Betrugsdetektionssystem, um mögliche Betrüge in Zahlungstransaktionen zwischen zwei Partnern (1, 2) aufzudecken, wobei Zahlungsdaten für die Zahlungstransaktion durch ein Mobilfunknetz übertragen werden, wobei die Zahlungstransaktion über einen mobilfunknetzexternen Zahlungsdienstanbieter (4) erfolgt,
**dadurch gekennzeichnet, dass** Mobilfunknetzinterne Parameter verwendet werden, um mögliche Betrüge aufzudecken.

15. Betrugsdetektionssystem gemäss Anspruch 14, in welchem Parameter des Zahlungsdienstanbieters mit den benannten mobilfunknetzinternen Parametern kombiniert werden.

16. Betrugsdetektionssystem gemäss Anspruch 15, mit einer Zahlungsplattform in der Infrastruktur des Mobilfunknetzes, mit welcher Zahlungstransaktionen durchgeführt werden.

17. Betrugsdetektionssystem gemäss Anspruch 16, in welchem die beiden Transaktionspartner jeweils an mehrere Geldkonten (100) gebunden sind, und in welchem das Paar von Geldkonten, das für eine bestimmte Zahlungstransaktion verwendet wird, automatisch von der benannten Zahlungsplattform bestimmt wird.

18. Betrugsdetektionssystem gemäss einem der Ansprüche 14 bis 17, das Zahlungstransaktionsdaten verwendet.

19. Betrugsdetektionssystem gemäss einem der Ansprüche 14 bis 18, das Profildaten eines Transaktionspartners beim Zahlungsdienstanbieter verwendet.

20. Betrugsdetektionssystem gemäss einem der Ansprüche 14 bis 19, in welchem die benannten mobilfunknetzinternen Parameter mindestens einen der folgenden Parameter umfassen:
Standort des ersten Partners,
Identität des Mobilfunknetzes,
Standort des zweiten Partners,
Trajektorie des ersten Partners,
Trajektorie des zweiten Partners,
Verwendete Kombination von Mobilgerät und Identifizierungsmodul,
Übertragungskanal, der für die Zahlungstransaktion verwendet wird,
Mobilgerätbenutzungsprofil des ersten Partners,
Mobilgerätbenutzungsprofil des zweiten Partners,
Manuelle und/oder ungewöhnliche Auswahl des verwendeten Zahlungsdienstes,
Zeit, und/oder
Datum, und/oder
Wochentag.

21. Betrugsdetektionssystem gemäss einem der Ansprüche 14 bis 20, in welchem die benannten Parameter des Zahlungsdienstanbieters mindestens einen der folgenden Parameter umfassen:
verwendeter Zahlungsdienst,
verwendetes Geldkonto,
Saldo auf dem verwendeten Geldkonto,
Zahlungsdienstbenutzungsprofil,
Zahlungsbetrag,
Zahlungstransaktionsfrequenz,
Anbietender Partner,
mehrere Falschversuche bei der Authentifikation,
Zeit, und/oder
Datum, und/oder
Wochentag, und/oder
Logfile früherer Transaktionen,
Schwarze Liste von Partnern, die für Transaktion mit einem gewissen Geldkonto gesperrt sind,
Weisse Liste von Partnern, die für eine Transaktion mit einem gewissen Geldkonto zugelassen sind.
Graue Liste von verdächtigen Partnern,
Anzahl von Transaktionen mit jedem Geldkonto während einer vorbestimmten Periode,
Profil des Partners.

22. Betrugsdetektionssystem gemäss einem der Ansprüche 14 bis 21, in welchem die benannten Parameter das Verfahren, das zur Nachladung von Geldkonten verwendet wird, umfassen.

23. Betrugsdetektionssystem gemäss einem der Ansprüche 14 bis 22, in welchem die benannten externen Zahlungsdiensten Zahlungstransaktionen über Debitkonten, Kreditkonten und Wertkonten umfassen.

24. Betrugsdetektionssystem gemäss einem der Ansprüche 14 bis 23, das derart gestaltet ist, dass es sowohl Parameter von den Zahlungspartnern (1, 2) berücksichtigt, als auch Parameter, die innerhalb des Mobilfunknetzes (3) bestimmt sind.

25. Betrugsdetektionssystem gemäss Anspruch 24, das derart gestaltet ist, dass es auch Parameter von den Zahlungsdienstanbietern berücksichtigt.

26. Betrugsdetektionssystem gemäss einem der Ansprüche 24 bis 24, das derart gestaltet ist, dass es auch Parameter von über Internet verbundene Drittparteien berücksichtigt.

27. Betrugsdetektionssystem gemäss einem der Ansprüche 14 bis 26, in welchem Data-mining-Methoden verwendet werden, um ungewöhnliche Verhalten von Mobilteilnehmern aufzudecken.

28. Betrugsdetektionssystem gemäss einem der Ansprüche 14 bis 27, das in einem Mobilgerät eines des benannten Partners (1) vorhanden ist.

29. Betrugsdetektionssystem gemäss einem der Ansprüche 14 bis 27, das im Terminal des Anbietenden Partners (2) vorhanden ist.

30. Betrugsdetektionssystem gemäss einem der Ansprüche 14 bis 29, das mit Mitteln in der Infrastruktur des Mobilfunknetzes (3) kooperiert, um den benannten Standort des Benutzers (1) zu bestimmen.
